**Europäisches Patentamt**

**European Patent Office**

**Office européen des brevets**

(19)

(11) Numéro de publication: **0 170 582 B1**

## (12) FASCICULE DE BREVET EUROPEEN

(45) Date de publication du fascicule du brevet:
**14.09.88**

(51) Int. Cl.⁴: **G 01 V 1/28**, G 01 V 1/40

(21) Numéro de dépôt: **85401405.7**

(22) Date de dépôt: **10.07.85**

(54) Procédé de traitement d'enregistrements de signaux résultant d'une exploration sismique d'un milieu.

(30) Priorité: **18.07.84 FR 8411341**

(43) Date de publication de la demande:
**05.02.86 Bulletin 86/6**

(45) Mention de la délivrance du brevet:
**14.09.88 Bulletin 88/37**

(84) Etats contractants désignés:
**DE GB IT NL**

(56) Documents cités:
**FR - A - 2 431 710**
**FR - A - 2 514 152**
**US - A - 3 207 256**
**US - A - 3 330 374**
**US - A - 4 346 460**

(73) Titulaire: **SOCIETE NATIONALE ELF AQUITAINE (PRODUCTION), Tour Elf 2, Place de la Coupole La Défense 6, F-92400 Courbevoie (FR)**

(72) Inventeur: **Arens, Georges, 6 Allée Alfred Sisley, F-78290 Croissy sur Seine (FR)**
Inventeur: **Staron, Philippe, 9, rue François Barbin, F-91540 Mennecy (FR)**

(74) Mandataire: **Levy, David et al, c/o S.A. Fedit-Loriot 38, avenue Hoche, F-75008 Paris (FR)**

# Description

La présente invention concerne un procédé de traitements d'enregistrements de signaux résultant d'une exploration sismique d'un milieu, et elle peut être mise en œuvre aussi bien en sismique réflexion ou réfraction que lors d'une exploration par diagraphie acoustique.

Pour des raisons de clarification, on donnera, dans ce qui suit, un exemple d'application à la diagraphie acoustique.

La technique classique de diagraphie acoustique consiste à créer, au moyen d'un émetteur, une énergie acoustique qui traverse tout ou partie des formations du milieu à explorer avant d'atteindre des récepteurs qui délivrent des signaux électriques qui sont enregistrés puis traités de manière d'une part, à pouvoir séparer, notamment, les ondes de compression ou ondes P des ondes de cisaillement ou ondes S, et d'autre part, à calculer les différentes vitesses moyennes desdites ondes dans les formations traversées.

Parmi les diagraphies acoustiques, on peut citer celles qui sont réalisées pendant le forage d'un puits et qu'on définit comme étant instantanées, et celles qui sont définies comme étant différées. Ces dernières sont effectuées au moyen d'un outil spécial qui est descendu dans le puits foré, ledit outil comprenant un ou plusieurs émetteurs et/ou un ou plusieurs récepteurs. En effet, l'outil peut comprendre soit uniquement le ou les émetteurs, les récepteurs étant alors disposés en surface, soit l'inverse c'est-à-dire uniquement des récepteurs, le ou les émetteurs étant en surface, ou encore à la fois le ou les émetteurs et le ou les récepteurs.

Le traitement des signaux reçus et enregistrés sur les récepteurs de tels outils ne permettait pas, bien que compliqué et très onéreux, de lever l'ambiguité sur la vitesse des ondes se propageant dans les formations entourant le puits foré. Cela provient du fait que le spectre des signaux reçus sur les récepteurs est relativement étroit, ceci étant lié au nombre d'arches dans chacun des signaux enregistrés. De plus, le rapport signal/bruit est loin d'être satisfaisant. Pour contourner les difficultés, la diagraphie classique limite les mesures aux seules ondes de compression ou ondes P qui arrivent les premières sur les récepteurs, écartant, par là-même, notamment les ondes S dont l'étude est pourtant nécessaire pour une meilleure connaissance des caractéristiques physiques des formations traversées.

Dans la demande française FR-A-2 431 710 sont décrits un outil et un procédé de diagraphie acoustique qui apportent des solutions originales aux problèmes posés par les outils et les procédés classiques décrits brièvement ci-dessus.

Le procédé décrit dans cette demande consiste à émettre et à recevoir des ondes acoustiques à l'aide de moyens d'émission et de réception qui définissent entre eux au moins deux trajets acoustiques de longueur différente, à enregistrer lors de chaque émission la totalité des signaux reçus, puis à repérer, à l'instant de l'émission et pour chaque enregistrement, les positions respectives du couple émetteur-récepteur.

Le traitement des enregistrements consiste à regrouper les enregistrements par paires de telle sorte que dans une paire donnée les deux trajets acoustiques correspondant aux deux enregistrements de ladite paire présentent d'une part une extrémité commune située à une même cote dans le puits foré et, d'autre part, une partie non commune située en regard d'une couche géologique d'intérêt, puis à mesurer sur chaque paire d'enregistrements la différence des temps d'arrivée des ondes acoustiques. Une autre étape du traitement consiste à intercorréler les deux enregistrements de chaque paire de manière à obtenir une fonction d'intercorrélation élémentaire, puis à sommer toutes les fonctions d'intercorrélation.

Ce traitement des signaux enregistrés permet d'éliminer les bruits de propagation et donc d'améliorer très sensiblement le rapport signal/bruit. De plus, les maxima correspondant aux différentes ondes reçues sont favorisés, ce qui permet de mieux étudier les caractéristiques desdites ondes.

Toutefois, le pointage des ondes à étudier, dans chaque fonction d'intercorrélation élémentaire peut présenter certaines difficultés. En effet, chaque fonction d'intercorrélation comporte un certain nombre de lobes ou arches principaux et secondaires et il est parfois difficile de déterminer avec certitude laquelle des arches correspond à l'énergie maximum d'une onde déterminée. Il en résulte que la somme des fonctions d'intercorrélation élémentaires relatives à plusieurs couches adjacentes des formations comprend également beaucoup d'arches; elle n'est donc pas utilisable pour lever l'ambiguité rappelée ci-dessus.

La demanderesse a donc recherché et trouvé un nouveau traitement des enregistrements des signaux qui s'applique non seulement au traitement des signaux obtenus par la diagraphie acoustique mais encore à ceux obtenus par d'autres procédés, d'exploration sismique du type réflexion ou réfraction, le nouveau traitement permettant d'améliorer le pouvoir de résolution en augmentant la précision avec laquelle on peut pointer les maxima ou lobes utiles.

La présente invention a pour objet un procédé de traitement d'enregistrements de signaux résultant d'une émission et d'une réception d'ondes acoustiques se propageant dans un milieu du type consistant à grouper les enregistrements par paires de telle sorte que dans chaque paire les deux enregistrements correspondent à deux trajets acoustiques comportant au moins une partie non commune définissant un espace de mesure et au moins une partie commune; à intercorréler les deux enregistrements de chaque paire de manière à obtenir une fonction d'intercorrélation élémentaire définissant le temps de parcours des ondes sur l'espace de mesure de ladite paire et caractérisé en ce qu'il consiste également: à grouper les fonctions d'intercorrélation élémentaires en au moins une famille dans laquelle les espaces de mesure sont inclus dans un même espace de référence prédéterminé; à transformer la variable temps des fonctions d'intercorrélation élémentaires de façon à ramener la dimension de leur espace de mesure à la dimension de l'espace de référence; à additionner toutes les fonctions d'intercorrélation transformées pour constituer une fonction d'intercorrélation somme dont les abscisses des lobes utiles sont représentatives du temps de propagation des ondes sur l'espace de référence.

Un avantage de la présente invention réside dans le fait que seuls sont conservés les lobes utiles représentatifs du temps de propagation des ondes sur l'espace de référence.

La transformation qui ramène l'espace de mesure de chaque fonction d'intercorrélation élémentaire à la dimension de l'espace de référence peut être une dilatation desdites fonctions d'intercorrélation pour les ramener à celle qui correspond à la couche géologique d'intérêt la plus grande, alors, on atténue les lobes secondaires ou plus exactement ils se trouvent rejetés latéralement assez loin des lobes principaux significatifs de l'énergie des ondes reçues. Cela est valable dans le domaine temporel. Lorsqu'on passe dans le domaine spectral, on s'aperçoit que la dilatation permet d'élargir le spectre de fréquence et, en conséquence, de le lisser davantage en donnant pratiquement un spectre plat.

D'autres avantages et caractéristiques apparaîtront à la lecture de la description donnée ci-dessous à titre indicatif mais non limitatif d'une application particulière de la présente invention, ainsi que du dessin annexé sur lequel:

La figure 1 est une représentation très schématique d'un outil de diagraphie acoustique disposé dans un puits foré.

La figure 2 est une représentation pour un espace de référence donné, des différents espaces de mesure sur lesquels seront déterminées les fonctions d'intercorrélation élémentaires qui seront ensuite déformées pour ramener leurs espaces de mesure à l'espace de référence.

La figure 3 est une représentation de deux fonctions d'intercorrélation élémentaires dont une est déformée par dilatation dans l'échelle des temps.

La figure 4 représente les fonctions d'intercorrélation déformées relatives à un espace de référence homogène dans lequel la vitesse de propagation d'une onde considérée est supposée constante.

La figure 5 représente des fonctions d'intercorrélation analogues à celles de la figure 4 mais pour un espace de référence dans lequel varie la vitesse de propagation de la même onde.

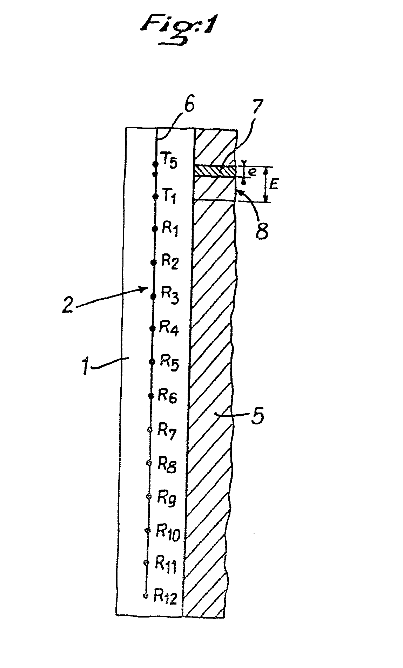

Sur la figure 1, on a représenté très schématiquement un puits foré 1 dans lequel est disposé un outil de diagraphie 2 comprenant des transducteurs matérialisés sur la figure par cinq émetteurs à magnétostriction $T_1$ à $T_5$ espacés entre eux de 0,25 m et douze récepteurs $R_1$ à $R_{12}$, du type à céramique piézoélectrique, espacés entre eux de 1 m. Avec une telle configuration de l'outil 2, on dispose, pour chaque position ou cote dudit outil 2 dans le puits foré 1, de 49 trajets acoustiques de longueurs différentes dans les formations 5 entourant le puits 1.

L'outil 2 est manœuvré depuis la surface du puits par des moyens de traction dont seule une partie d'un câble 6 est représentée sur la figure 1. Le câble 6 sert également au logement des conducteurs électriques nécessaires pour le fonctionnement dudit outil 2.

Pour plus de clarté, les trajets acoustiques des ondes émises par l'un des émetteurs $T_1$ à $T_5$ et reçus sur les récepteurs $R_1$ à $R_{12}$ n'ont pas été matérialisés sur la figure. On pourra utilement se rapporter à la demande FR-A-2 431 710 dans laquelle ils sont représentés.

L'outil a, par exemple, un pas d'avancement égal à l'espacement entre émetteurs, ledit espacement correspondant à l'épaisseur e d'une couche géologique d'intérêt 7 qui constitue également ce qu'on définit par la suite comme étant un espace de mesure. Pour l'outil 2 considéré, le pas d'avancement est donc de 0,25 m.

La remontée de l'outil 2 dans le puits 1 est effectuée de telle façon que l'émetteur inférieur $T_1$ vienne occuper la position qu'avait l'émetteur adjacent $T_2$, l'émetteur $T_2$ occupant alors la place de l'émetteur $T_3$ et ainsi de suite.

De ce fait, à chaque émission d'une onde acoustique, et pour chaque cote de l'outil, il existe des trajets acoustiques qui ont une extrémité commune et une partie non commune. Si on traçait le trajet acoustique d'une onde émise par l'émetteur $T_5$ et reçue sur le récepteur $R_1$, et celui de l'onde émise par l'émetteur $T_4$ et reçue également sur le récepteur $R_1$, on serait en présence de deux trajets acoustiques ayant une même extrémité $R_1$ et une partie non commune correspondant à l'espacement entre les émetteurs $T_4$ et $T_5$, ladite partie non commune correspondant à la couche géologique d'intérêt 7 ou espace de mesure.

Les ondes reçues sur les récepteurs $R_1$ à $R_{12}$ sont converties en signaux électriques qui sont enregistrés sur des moyens d'enregistrement non représentés mais qui sont bien connus des sismiciens. Les moyens d'enregistrement enregistrent également pour chaque émission la cote de l'outil 2 et les positions respectives du couple émetteur-récepteur associées pour cette émission. Ainsi, à chaque enregistrement on est à même de lui faire correspondre le couple émetteur-récepteur qui lui a donné naissance.

Une première étape selon l'invention consiste à regrouper les enregistrements par paires, chaque paire comprenant, pour le type d'onde dont on veut déterminer la vitesse de propagation moyenne, deux trajets acoustiques ayant une extrémité commune et une seule partie non commune.

Une dernière étape du traitement consiste à choisir un espace de référence dans lequel on veut justement déterminer ladite vitesse de propagation moyenne. Une manière de déterminer l'espace de référence est, entre autre, de prendre une couche géologique 8 d'épaisseur égale à l'espacement entre les émetteurs extrêmes de l'outil. Dans l'exemple représenté sur le dessin, cet espacement E est égal à 1 m pour un outil à cinq émetteurs espacés régulièrement de 0,25 m.

Les espaces de mesure tels que précisés ci-dessus et en raison de l'application à la diagraphie sont unidirectionnels.

Les deux enregistrements de chaque paire sont intercorrélés entre eux, le résultat de l'opération étant une fonction d'intercorrélation dite élémentaire qui sert à définir le temps de parcours de l'onde considérée sur la partie non commune puisque l'opération de corrélation a justement pour but d'éliminer la partie commune des deux trajets acoustiques correspondant aux deux enregistrements.

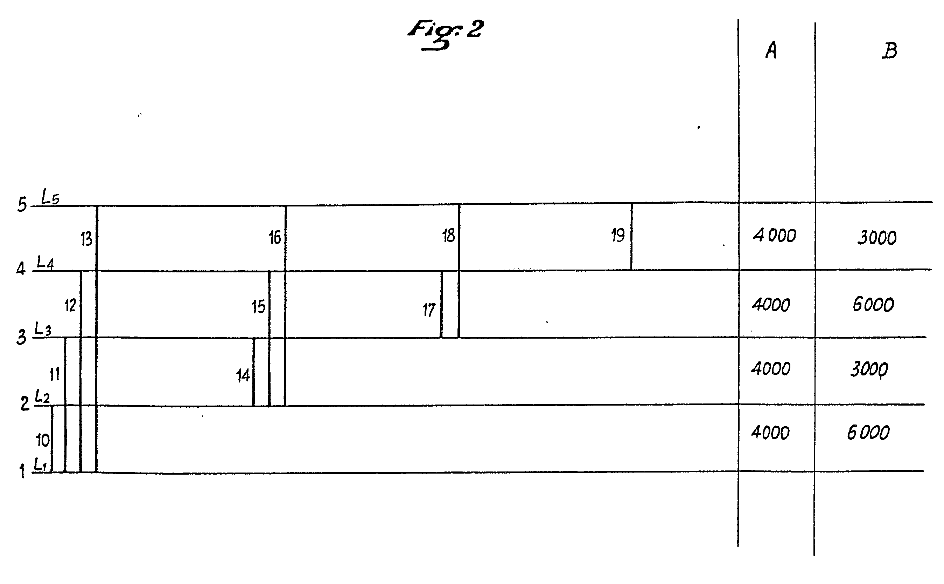

Les fonctions d'intercorrélation élémentaires sont ensuite groupées de façon à constituer un ensemble de familles pour lesquelles les espaces de mesure correspondant aux fonctions d'intercorrélation élémentaires soient inclus dans l'espace de référence prédéterminé E. La figure 2 représente, sur la gauche, tous les espaces de mesure sur lesquels les fonctions d'intercorrélation élémentaires sont effectuées dans l'espace de référence E. Les espacements entre les lignes horizontales $L_1$ à $L_5$ représentent les espaces de mesure correspondant chacun à une couche géologique d'intérêt. Par exemple la ligne $L_1$ correspond à la position de l'émetteur $T_1$ de l'outil 2, les lignes $L_2$ à $L_5$ correspondant de la même manière aux positions des émetteurs $T_2$ à $T_5$. Sur cette figure, le trait vertical 10 représente l'espace de mesure correspondant à la fonction d'intercorrélation élémentaire effectuée sur les deux enregistrements de la paire associée aux émetteurs $T_1$ et $T_2$, et à un même récepteur quelconque, tandis que le trait 11 représente l'espace de mesure correspondant à la fonction d'intercorrélation élémentaire obtenue à partir de la paire associée aux émetteurs $T_3$ et $T_1$ et à un même récepteur quelconque.

Les fonctions d'intercorrélations élémentaires correspondant aux espaces de mesure 10 à 13 représentent une première famille qui se caractérise par des espaces de mesure ayant une extrémité commune.

Les fonctions d'intercorrélation élémentaires correspondant aux espaces de mesure 14 à 16, 17 et 18, puis enfin 19 représentent les autres familles caractérisées par des critères analogues.

Bien évidemment, la répartition des fonctions d'intercorrélation élémentaires en familles peut être effectuée de manière différente, par exemple en regroupant toutes les fonctions d'intercorrélation élémentaires correspondant à des espaces de mesure ayant une même dimension. Ceci conduirait en particulier à constituer une famille comprenant les fonctions d'intercorrélation élémentaires correspondant aux espaces de mesure 10, 14, 17 et 19; ou 11, 15 et 18; ou encore 12 et 16.

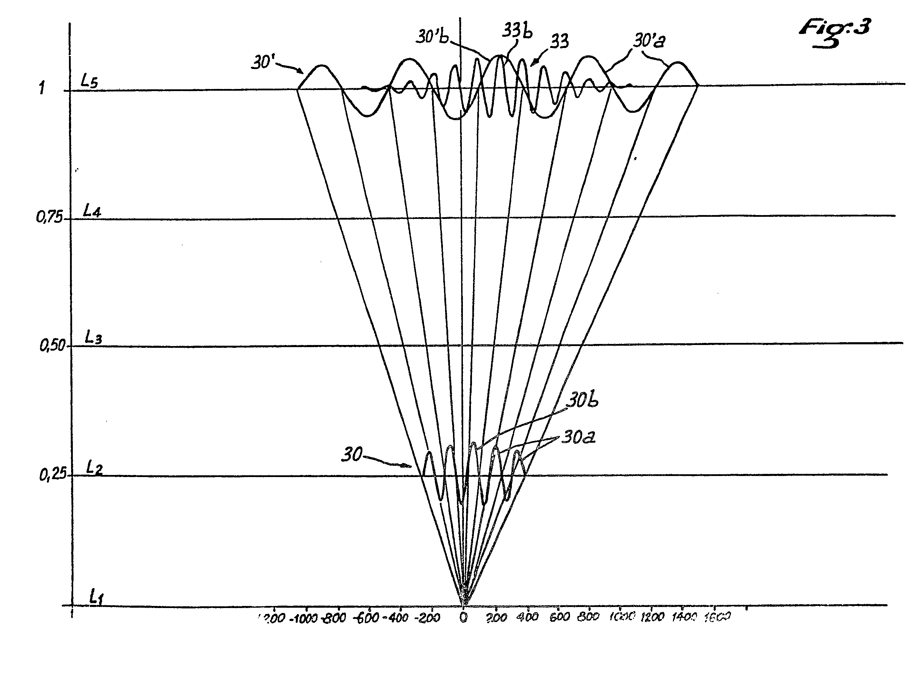

La figure 3 est une représentation de l'amplitude en fonction du temps donné en microsecondes, de deux fonctions d'intercorrélation 30 et 33 correspondant aux espaces de mesure 10 et 13 respectivement et de la transformée 30' de la fonction d'intercorrélation 30.

Selon une caractéristique du traitement selon l'invention, la variable temps des fonctions d'intercorrélation élémentaires est transformée de manière à ramener la dimension de l'espace de mesure de ces fonctions à celle de l'espace de référence. En l'occurence, la transformation est une dilatation dans l'échelle des temps et plus particulièrement une homothétie. En comparant la fonction d'intercorrélation 30 et sa transformée 30', on constate que la transformée 30' est homothétique de la fonction d'intercorrélation 30 dans une homothétie de centre 0 et de rapport 4, le centre 0 étant également l'origine théorique des temps des fonctions d'intercorrélation. Dans l'exemple représenté sur la figure 3, les lignes obliques matérialisent la correspondance des différents points entre la fonction d'intercorrélation 30 et sa transformée 30'. On voit également que le temps de parcours sur l'espace de mesure de l'onde acoustique considérée enregistrée sur les enregistrements ayant donné naissance à la fonction d'intercorrélation 30 est ramené à la dimension de l'espace de référence qui n'est autre que le temps de parcours du même type d'onde enregistrée sur les enregistrements ayant donné naissance à la fonction d'intercorrélation 33.

Un but de cette étape importante du traitement est de rejeter latéralement les lobes secondaires 30a de la fonction d'intercorrélation élémentaire 30, de manière à mettre en correspondance le lobe principal 30b avec celui 33b de la fonction d'intercorrélation élémentaire 33. Cela est indispensable surtout lorsque, comme c'est le cas à propos des fonctions d'intercorrélation élémentaires 30 et 33, les lobes secondaires 30a et 33a sont sensiblement de même amplitude que les lobes principaux respectifs 30b et 33b. La dilatation dans l'échelle des temps permet d'amener le lobe principal transformé 30b' en correspondance avec le lobe principal 33b et de rejeter latéralement les lobes secondaires transformés 30a'. L'atténuation des lobes secondaires est d'autant meilleure qu'il existe une bonne adéquation entre la période dominante des fonctions d'intercorrélation élémentaires et les rapports de dimension entre les différents espaces de mesure d'une même famille.

Pour ne pas surcharger la figure 3, on n'a pas représenté les autres fonctions d'intercorrélation élémentaires correspondant aux espaces de mesure 11 et 12 et leurs transformées.

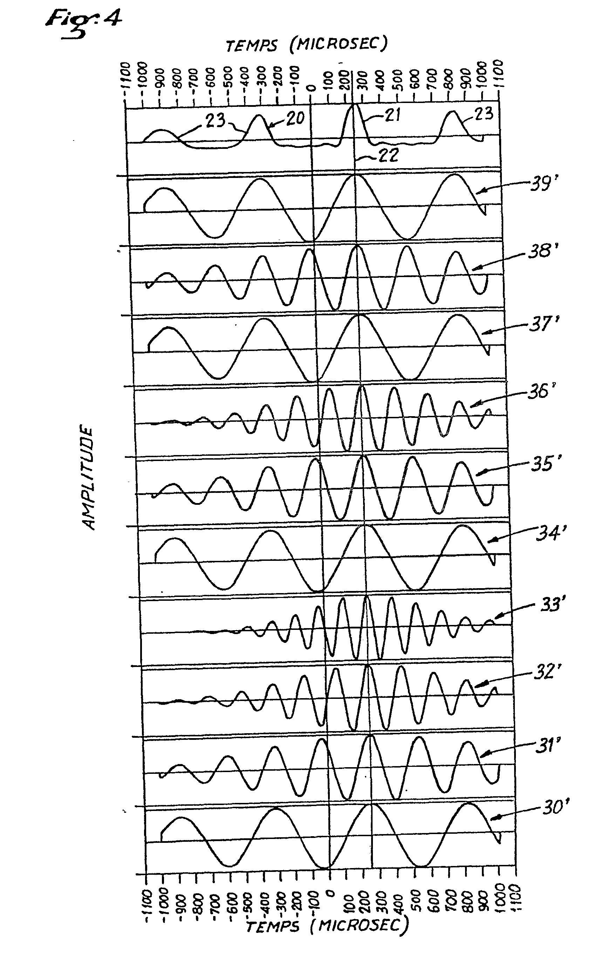

Sur la figure 4, on a représenté de bas en haut les transformées 30' à 39' des fonctions d'intercorrélation élémentaires correspondant aux espaces de mesure 10 à 19, la seule qui n'ait subi aucune transformation étant bien entendu la fonction d'intercorrélation 33 puisque son espace de mesure est l'espace de référence. Les transformées 30' à 39' se trouvent être calées par rapport au zéro de l'axe des temps donnés en microsecondes, l'axe des ordonnées représentant les amplitudes. De plus, les transformées 30' à 39' correspondent à une couche géologique dans laquelle la vitesse de l'onde acoustique considérée ne varie pratiquement pas, par exemple égale à 4000 m/s. On additionne ensuite toutes les transformées 30' à 39' dont le résultat est une fonction d'intercorrélation somme 20 qui présente un lobe utile 21 dont l'abscisse est de 250 μs pour l'exemple représenté. Lorsqu'on trace une verticale 22 parallèle à l'axe des ordonnées et passant par le sommet du lobe utile 21, on constate que ladite verticale 22 passe également par le sommet des lobes principaux des transformées 30' à 39', ce qui était prévisible en raison d'une vitesse constante de l'onde acoustique dans toute l'épaisseur de la couche de référence. Les lobes résiduels 23 de la fonction d'intercorrélation somme sont rejetés latéralement et atténués en amplitude.

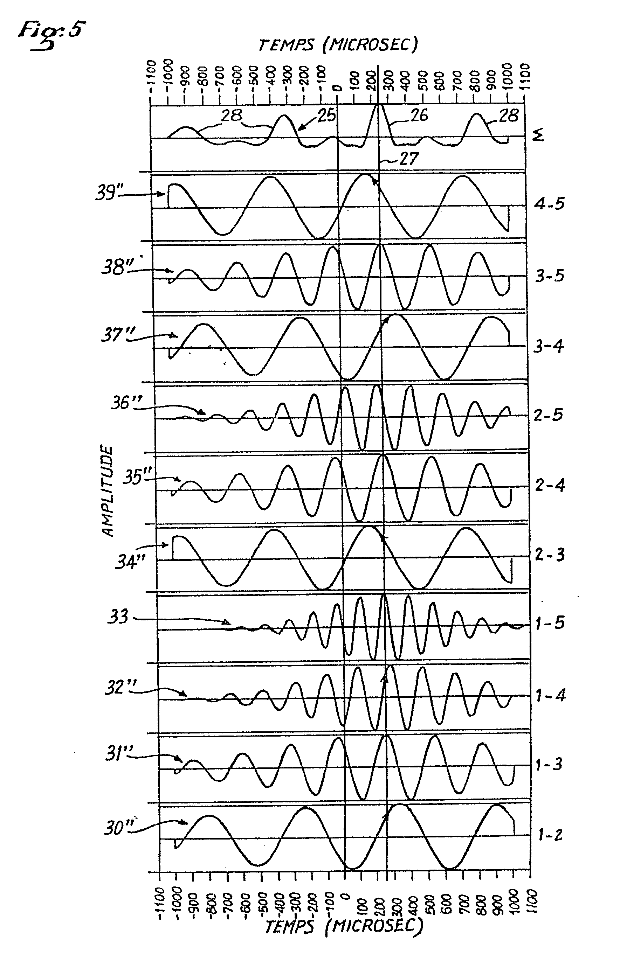

Lorsque la vitesse de propagation de l'onde considérée varie dans la couche de référence ou espace de référence, comme cela est indiqué dans la colonne B de la figure 2, la colonne A étant donnée pour une vitesse constante égale à 4000 m/s, les transformées 30" à 39" (figure 5) des fonctions d'intercorrélation correspondant aux espaces de mesure 10 à 19 sont différentes des transformées 30' à 39' de la figure 4.

Une addition des transformées 30" à 39" a comme résultat une fonction d'intercorrélation somme 25 qui présente un lobe utile 26 dont l'abscisse, 250 μs, est représentative du temps de propagation moyen de l'onde considérée dans la couche de référence. Le décalage en temps de 250 μs du sommet du lobe utile 26 de la fonction d'intercorrélation somme 25 est à rapprocher du décalage en temps également de 250 μs du sommet du lobe utile 21 de la fonction d'intercorrélation somme 20 de la figure 4. Cela signifie que dans les deux cas, le temps de propagation de l'onde dans la couche de référence est identique. En d'autres termes la lenteur $\dfrac{1}{V}$ qui est l'inverse de la vitesse est égale dans les deux cas. On peut le vérifier avec les vitesses données dans les colonnes A et B de la figure 2 et pour des épaisseurs de couches d'intérêt égales. En effet, si on prend deux couches géologiques de même épaisseur dans lesquelles la vitesse moyenne de propagation d'une onde est de 4000 m/s, la lenteur dans les deux couches serait

$$\frac{1}{V} = \frac{1}{n} \Sigma \frac{1}{Vi} \text{ soit}$$

$$\frac{1}{2} \left( \frac{1}{4000} + \frac{1}{4000} \right) = \frac{1}{4000}$$

secondes/ mètre, n étant le nombre d'espaces de mesure de même dimension et Vi la vitesse de l'onde dans chaque espace de mesure. Si maintenant la vitesse dans une desdites couches était de 6000 m/s et de 3000 m/s dans l'autre couche, la lenteur globale dans les deux couches serait

$$\frac{1}{2} \left( \frac{1}{3000} + \frac{1}{6000} \right) = \frac{1}{4000} \quad \text{secondes/}$$

mètre.

Un trait vertical 27 tracé parallèlement à l'axe des ordonnées et passant par le sommet du lobe utile 26 montre que les lobes principaux des transformées 10" à 19" ne sont plus alignés, comme c'était le cas sur la figure 4. Cela est tout à fait normal puisque la vitesse de propagation de l'onde considérée varie d'une couche géologique à l'autre dans la couche de référence, la conséquence étant que les décalages des fonctions d'intercorrélation élémentaires sont différents d'une couche géologique à l'autre. Dans cette hypothèse, et c'est un autre intérêt de la présente invention, on peut déterminer quels sont réellement les lobes principaux des transformées 30" à 39" et, par suite, les maxima réels des fonctions d'intercorrélation élémentaires. Pour cela, en se déplaçant sur les fonctions d'intercorrélation élémentaires, dans le sens montant indiqué par une flèche sur la figure 5, on sélectionne sur chaque fonction d'intercorrélation élémentaire le lobe le plus proche du trait vertical 27, l'abscisse dudit lobe sélectionné représentant la lenteur de l'onde sur l'espace de mesure de la fonction d'intercorrélation élémentaire considérée. Par exemple, pour la transformée 39", le lobe principal est le lobe 39b" dont l'abscisse est représentative de la lenteur sur l'espace de mesure correspondant, alors que pour la transformée 37" le lobe principal est le lobe 37b" dont l'abscisse est supérieure à celle du lobe principal 39b", vérifiant par là-même la différence entre les vitesses de propagation de l'onde considérée dans les couches d'intérêt respectives, la vitesse pour la transformée 39" étant de 3000 m/s alors que la vitesse pour la transformée 37" est de 6000 m/s.

Les lobes principaux des transformées qui sont alignés avec le lobe utile 26 permettent de déduire que la lenteur correspondante est égale à la lenteur moyenne de la couche de référence. Il en est de même pour les transformées 38", 35", 33 et 31".

Les lobes résiduels 28 de la fonction d'intercorrélation somme 25 sont rejetés latéralement et atténués en amplitude.

Tout ce qui précède a été mentionné en référence à un type d'onde considérée, par exemple l'onde de compression ou onde P. Pour les autres types d'ondes telles qu'ondes de cisaillement ou ondes S, ondes de Stoneley, etc., on procéderait de même en sélectionnant sur chaque paire d'enregistrements les parties des enregistrements correspondant aux ondes S, de Stoneley, etc., lesdites parties d'enregistrements étant ensuite intercorrélées pour donner naissance à une fonction d'intercorrélation élémentaire. Les autres opérations du traitement selon l'invention seraient effectuées de la manière indiquée ci-dessus.

Il est à noter que dans le domaine des spectres de fréquences, le traitement selon l'invention se traduit par une amélioration très importante de ce qu'on avait habituellement par les procédés usuels. En effet, le rejet latéral des lobes résiduels des fonctions d'intercorrélation somme correspond à un élargissement de la bande passante du spectre de fréquences par rapport aux spectres correspondants des fonctions d'intercorrélation élémentaires.

Enfin, comme cela est mentionné dans le préambule, le traitement selon la présente invention n'est pas limité aux procédés d'exploration sismique par diagraphie acoustique, mais peut être utilisé pour d'autres procédés d'exploration sismique tels que ceux basés sur la réflexion ou la réfraction des ondes produites dans le milieu à explorer. Ceci est possible grâce au fait que le traitement proposé ne concerne que la partie non commune de deux trajets acoustiques quelles que soient les formes mêmes desdits trajets.

Bien entendu, l'invention n'est nullement limitée aux modes de réalisation de l'exemple décrit et représenté, elle est susceptible de nombreuses variantes accessibles à l'homme de l'art, suivant les applications envisagées et sans s'écarter pour cela du cadre de l'invention.

Il en est notamment ainsi en ce qui concerne la relation entre l'espacement entre émetteurs, le pas d'avancement de l'outil 2 et les dimensions des espaces de mesure et de référence. En effet, les critères importants, selon l'invention, sont la plus petite distance entre deux transducteurs de même type (émetteurs ou récepteurs) ou la plus petite des différences entre les distances de deux transducteurs de types opposés (émetteurs et récepteurs), et un espace de référence de dimension supérieure à cet espacement, le pas d'avancement de l'outil étant indépendant et pouvant être quelconque. On pourrait concevoir un outil comprenant des récepteurs espacés de 0,25 m et des émetteurs espacés de 1 m et définir un espace de mesure de dimension égale à 0,25 m et un espace de référence quelconque à la condition que sa dimension soit supérieure à 0,25 m, par exemple égale à 1 m. Pour plus de commodité de mesures, on choisit un espace de référence dont la dimension est un multiple de celle de l'espace de mesure.

**Revendications**

1. Procédé de traitement d'enregistrements de signaux résultant d'une émission et d'une réception d'ondes acoustiques se propageant dans un milieu du type consistant à:
   - grouper les enregistrements par paires de telle sorte que dans chaque paire les deux enregistrements correspondent à deux trajets acoustiques comportant au moins une partie non commune définissant un espace de mesure et au moins une partie commune;
   - intercorréler les deux enregistrements de chaque paire de manière à obtenir une fonction d'intercorrélation élémentaire définissant le temps de parcours des ondes sur l'espace de mesure de ladite paire; et caractérisé en se qu'il consiste également à:
   - grouper les fonctions d'intercorrélation élémentaires en au moins une famille dans laquelle les espaces de mesure sont inclus dans un même espace de référence prédéterminé;
   - transformer la variable temps des fonctions d'intercorrélation élémentaires de façon à ramener la dimension de leur espace de mesure à la dimension de l'espace de référence;
   - additionner toutes les fonctions d'intercorrélation transformées pour constituer une fonction d'intercorrélation somme dont les abscisses des lobes utiles sont représentatives du temps de propagation des ondes sur l'espace de référence.

2. Procédé selon la revendication 1, caractérisé en ce que la dimension de l'espace de référence est supérieure à celle de l'espace de mesure.

3. Procédé selon la revendication 1, caractérisé en ce que la transformation est une homothétie de rapport égal au rapport de la dimension de l'espace de référence à la dimension de l'espace de mesure.

4. Procédé selon la revendication 1, caractérisé en ce que pour chaque type d'onde il consiste à sélectionner sur chaque fonction d'intercorrélation transformée le lobe le plus proche du lobe utile de la fonction d'intercorrélation somme, l'abscisse du lobe sélectionné étant représentatif de la lenteur du type d'onde considérée dans l'espace de mesure.

5. Procédé selon la revendication 1, caractérisé en ce que les enregistrements sont obtenus au moyen d'un outil de diagraphie comprenant au moins quatre transducteurs dont au moins trois sont disposés dans un puits foré.

6. Procédé selon les revendications 1 et 5, caractérisé en ce que l'espace de mesure est unidiretionnel.

7. Procédé selon les revendications 5 et 6, caractérisé en ce que l'outil de diagraphie est déplacé dans le puits foré d'un pas d'avancement égal à l'espacement entre deux transducteurs de même nature.

8. Procédé de traitement de signaux acoustiques, du type selon lequel il consiste à:
   - émettre des ondes acoustiques par des moyens d'émission;
   - recevoir les ondes après leur propagation dans les formations entourant un puits foré sur des moyens de réception, lesdits moyens d'émission et de réception définissant entre eux au moins trois trajets acoustiques de longueurs différentes;
   - enregistrer lors de chaque émission la totalité des signaux reçus sur les moyens de réception;
   - repérer, à l'instant de l'émission et pour chaque enregistrement, les positions respectives des moyens d'émission et de réception qui a donné naissance audit enregistrement;
   - regrouper tous les enregistrements par paires de telle sorte que dans une paire donnée les deux trajets acoustiques correspondant aux deux enregistrements de ladite paire présentent une extrémité commune et une partie non commune;
   - intercorréler les deux enregistrements de chaque paire de manière à obtenir une fonction d'intercorrélation élémentaire, caractérisé en ce qu'il consiste à:
   - sélectionner parmi les fonctions d'intercorrélation élémentaires une fonction d'intercorrélation de référence qui correspond à une couche de référence dont l'épaisseur est supérieure à la couche géologique d'intérêt;
   - transformer la variable temps de chaque fonction d'intercorrélation élémentaire autre que la fonction d'intercorrélation de référence de manière à ramener chaque variable temps à la dimension de la variable temps de la fonction d'intercorrélation de référence; et

– additionner toutes les fonctions d'intercorrélation transformées et la fonction d'intercorrélation de référence pour constituer une fonction d'intercorrélation somme dont les abscisses des lobes utiles sont représentatives du temps de propagation des ondes dans la couche de référence.

9. Procédé selon l'une des revendications 1 ou 8, caractérisé en ce que seules les parties des enregistrements correspondant à un même type d'onde acoustique sont intercorrélées.

10. Procédé selon l'une des revendications 1 ou 8, caractérisé en ce que seules les parties des fonctions d'intercorrélation élémentaires correspondant à un même type d'onde acoustique sont transformées et additionnées.

11. Procédé selon la revendication 8, caractérisé en ce que la couche de référence définissant un espace de référence est un multiple entier de l'épaisseur de la couche d'intérêt définissant un espace de mesure.

12. Procédé selon la revendication 8, caractérisé en ce que les moyens d'émission comportent plusieurs émetteurs équidistants séparés entre eux par une distance égale à l'épaisseur de la couche d'intérêt.

13. Procédé selon la revendication 8, caractérisé en ce que les moyens de réception comportent plusieurs récepteurs équidistants séparés entre eux par une distance égale à l'épaisseur de la couche de référence.

14. Procédé selon l'une des revendications 8 à 13, caractérisé en ce que l'épaisseur de la couche d'intérêt est égale à 0,25 m.

15. Procédé selon l'une des revendications 8 à 13, caractérisé en ce que l'épaisseur de la couche de référence est égale à un mètre.

**Patentansprüche**

1. Verfahren zur Verarbeitung von Signalaufzeichnungen, die aus der Aussendung und dem Empfang von sich durch ein Medium fortpflanzenden akustischen Wellen resultieren, umfassend

paarweises Gruppieren der Aufzeichnungen derart, dass in jedem Paar die beiden zwei akustischen Bahnen entsprechenden Aufzeichnungen mindestens einen nicht gemeinsamen Teil, der einen Messraum definiert, und mindestens einen gemeinsamen Teil aufweisen,

Interkorrelieren der beiden Aufzeichnungen jedes Paares zur Gewinnung einer elementaren Interkorrelationsfunktion, die die Laufzeit der Wellen in dem Messraum des besagten Paares definiert,

dadurch gekennzeichnet, dass es ferner umfasst

Gruppieren der elementaren Interkorrelationsfunktionen zu mindestens einer Familie, in der die Messräume in einem vorgegebenen gleichen Bezugsraum enthalten sind,

Transformieren der Zeitvariablen der elementaren Interkorrelationsfunktionen derart, dass die Grössenordnung des Messraums auf diejenige des Bezugsraums gebracht wird,

Aufaddieren sämtlicher transformierter Interkorrelationsfunktionen zur Bildung einer Summen-Interkorrelationsfunktion, bei der die Abszissen der Nutzkeulen die Ausbreitungszeit der Wellen in dem Bezugsraum angeben.

2. Verfahren nach Anspruch 1, dadurch gekennzeichnet, dass die Grössenordnung des Bezugsraums grösser ist als die des Messraums.

3. Verfahren nach Anspruch 1, dadurch gekennzeichnet, dass die Transformation eine winkeltreue Transformation in einem Verhältnis ist, die gleich dem Verhältnis der Grössenordnung des Bezugsraums zu der des Messraums ist.

4. Verfahren nach Anspruch 1, dadurch gekennzeichnet, dass für jeden Wellentyp aus jeder transformierten Interkorrelationsfunktion diejenige Keule ausgewählt wird, die der Nutzkeule der Summen-Interkorrelationsfunktion am nächsten kommt, wobei die Abszisse der ausgewählten Keule die Langsamkeit des betrachteten Wellentyps im Messraum angibt.

5. Verfahren nach Anspruch 1, dadurch gekennzeichnet, dass die Aufzeichnungen mit Hilfe eines Aufzeichnungsgerätes mit mindestens vier Wandlern gewonnen werden, von denen mindestens drei in einem Bohrloch angeordnet sind.

6. Verfahren nach den Ansprüchen 1 und 5, dadurch gekennzeichnet, dass der Messraum sich in einer Richtung estreckt.

7. Verfahren nach den Ansprüchen 5 und 6, dadurch gekennzeichnet, dass das Aufzeichnungsgerät in dem Bohrloch um jeweils einen Vorschubschritt versetzt wird, der gleich dem Abstand zwischen zwei gleichartigen Wandlern ist.

8. Verfahren zur Verarbeitung von akustischen Signalen, umfassend

Aussenden von akustischen Wellen mit Sendeeinrichtungen,

Empfangen der Wellen nach Ausbreitung durch ein Bohrloch umgebende Formationen mit Empfangseinrichtungen, wobei die Sende- und Empfangseinrichtungen untereinander mindestens drei akustische Bahnen unterschiedlicher Längen definieren,

Aufzeichnen sämtlicher mit den Empfangseinrichtungen empfangener Signale bei jeder Aussendung,

Markieren der jeweiligen Positionen der die Aufzeichnung ergebenden Sende- und Empfangseinrichtungen im Moment der Aussendung und bei jeder Aufzeichnung,

paarweises Umgruppieren der Aufzeichnungen derart, dass in jedem Paar die beiden den zwei Aufzeichnungen dieses Paares entsprechenden akustischen Bahnen ein gemeinsames Ende und einen nicht gemeinsamen Teil aufweisen,

Interkorrelieren der beiden Aufzeichnungen jedes Paares zur Gewinnung einer elementaren Interkorrelationsfunktion,

dadurch gekennzeichnet, dass es ferner umfasst Auswählen einer Bezugs-Interkorrelationsfunktion aus den elementaren Interkorrelationsfunktionen, wobei die Bezugs-Interkorrelationsfunktion einer Referenzschicht entspricht, deren Dicke grösser ist als die der interessierenden geologischen Schicht,

Transformieren der Zeitvariablen jeder von der Bezugs-Interkorreltionsfunktion verschiedenen elementaren Interkorrelationsfunktion derart, dass jede Zeitvariable auf die Grössenordnung der Zeitvariablen der Bezugs-Interkorrelationsfunktion gebracht wird, und

Aufaddieren sämtlicher transformierter Interkorrelationsfunktionen und der Bezugs-Interkorrelationsfunktion zur Bildung einer Summen-Interkorrelationsfunktion, bei der die Abszissen der Nutzkeulen die Ausbreitungszeit der Wellen in der Referenzschicht angeben.

9. Verfahren nach Anspruch 1 oder 8, dadurch gekennzeichnet, dass nur die dem gleichen akustischen Wellentyp entsprechenden Teile der Aufzeichnungen interkorreliert werden.

10. Verfahren nach Anspruch 1 oder 8, dadurch gekennzeichnet, dass nur die dem gleichen akustischen Wellentyp entsprechenden Teile der elementaren Interkorrelationsfunktionen transformiert und aufaddiert werden.

11. Verfahren nach Anspruch 8, dadurch gekennzeichnet, dass die einen Bezugsraum definierende Referenzschicht ein ganzzahliges Vielfaches der Dicke der einen Messraum definierenden interessierenden Schicht ausmacht.

12. Verfahren nach Anspruch 8, dadurch gekennzeichnet, dass die Sendeeinrichtungen mehrere in gleichen Abständen angeordnete Sender aufweisen, wobei der Abstand zwischen den Sendern gleich der Dicke der interessierenden Schicht ist.

13. Verfahren nach Anspruch 8, dadurch gekennzeichnet, dass die Empfangseinrichtungen mehrere in gleichen Abständen angeordnete Empfänger aufweisen, wobei der Abstand zwischen den Empfängern gleich der Dicke der Referenzschicht ist.

14. Verfahren nach einem der Ansprüche 8 bis 13, dadurch gekennzeichnet, dass die Dicke der interessierenden Schicht 0,25 m beträgt.

15. Verfahren nach einem der Ansprüche 8 bis 13, dadurch gekennzeichnet, dass die Dicke der Referenzschicht 1 m beträgt.

**Claims**

1. Process for the processing of recordings of signals resulting from a transmission and a reception of acoustic waves propagating in a medium of the type consisting in;

- grouping the recordings in pairs such that in each pair the two recordings correspond to two acoustic paths including at least one non-common section defining a measuring space and at least one common section;

- crosscorrelating the two recordings of each pair in order to obtain an elementary crosscorrelation function defining the time taken by the waves of the said pair to travel through the measuring space; and characterized in that it also consists in:

- grouping the elementary crosscorrelation functions in at least one family in which the measuring spaces are included in a same predetermined reference space;

- transforming the time variable of the elementary crosscorrelation functions in order to bring the dimension of their measuring space to the dimension of the reference space;

- adding all the transformed crosscorrelation functions in order to form a sum crosscorrelation function of which the abscissas of the useful lobes represent the propagation time of the waves over the reference space.

2. Process according to Claim 1, characterized in that the dimension of the reference space is greater than that of the measuring space.

3. Process according to Claim 1, characterized in that the transformation is a homothetic transformation of ratio equal to the ratio of the dimension of the reference space to the dimension of the measuring space.

4. Process according to Claim 1, characterized in that for each type of wave it consists in selecting in each transformed crosscorrelation function the closest lobe to the useful lobe of the sum crosscorrelation function, the abscissa of the selected lobe representing the slowness of the type of wave considered in the measuring space.

5. Process according to Claim 1, characterized in that the recordings are obtained using a logging tool containing at least four transducers of which at least three are placed in a wellbore.

6. Process according to Claims 1 and 5, characterized in that the measuring space is unidirectional.

7. Process according to Claims 5 and 6, characterized in that the logging tool is moved inside the wellbore with an advancing step equal to the spacing between two transducers of the same type.

8. Process for the processing of acoustic signals, of the type according to which it consists in:

- transmitting acoustic waves by means of transmission;

- receiving the waves after they have propagated in the formations surrounding a wellbore on means of reception, the said means of transmission and reception defining between them at least three acoustic paths of different lenghts;

- recording during each transmission the whole signals received on the means of reception;

- marking, at the moment of transmission and for each recording, the respective positions of the means of transmission and reception which gave rise to the said recording;

- grouping all the recordings in pairs such that in a given pair the two acoustic paths corresponding to the two recordings of the said pair have one common end and a non common section;

- crosscorrelating the two recordings of each pair in order to obtain an elementary crosscorrelation function, characterized in that it consists in:

- selecting from the elementary crosscorrelation functions a reference crosscorrelation function which corresponds to a reference layer the thickness of which is greater than the geological layer of interest;

– transforming the time variable of each elementary crosscorrelation function other than the reference crosscorrelation function in order to bring each time variable to the dimension of the time variable of the reference crosscorrelation function; and

– adding all the transformed crosscorrelation functions and the reference crosscorrelation function in order to form a sum crosscorrelation function of which the abscissas of the useful lobes are representative of the propagation time of the waves in the reference layer.

9. Process according to one of Claims 1 or 8, characterized in that only the parts of the recordings corresponding to a same type of acoustic wave are crosscorrelated.

10. Process according to one of Claims 1 or 8, characterized in that only the parts of the elementary crosscorrelation functions corresponding to a same type of acoustic wave are transformed and added.

11. Process according to Claim 8, characterized in that the reference layer defining a reference space is a whole multiple of the thickness of the layer of interest defining a measuring space.

12. Process according to Claim 8, characterized in that the means of transmission include several equidistant transmitters separated from each other by a distance equal to the thickness of the layer of interest.

13. Process according to Claim 8, characterized in that the means of reception include several equidistant receivers separated from each other by a distance equal to the thickness of the reference layer.

14. Process according to one of Claims 8 to 13, characterized in that the thickness of the layer of interest is equal to 0.25 m.

15. Process according to one of Claims 8 to 13, characterized in that the thickness of the reference layer is equal to one metre.

1/5

*Fig:1*

Fig. 2

Fig.3

Fig. 4

TEMPS (MICROSEC)

AMPLITUDE

TEMPS (MICROSEC)

0 170 582

5/5

Fig:5